Europäisches Patentamt

European Patent Office

Office européen des brevets

(11) Publication number: 0 366 019 A1

# EUROPEAN PATENT APPLICATION

(21) Application number: 89119519.0

(22) Date of filing: 20.10.89

(51) Int. Cl.5: B01D 3/14

(30) Priority: 21.10.88 JP 265377/88

(43) Date of publication of application:
02.05.90 Bulletin 90/18

(84) Designated Contracting States:
DE GB

(71) Applicant: NKK CORPORATION
1-2, 1-chome, Marunouchi Chiyoda-ku
Tokyo(JP)

(72) Inventor: Naka, Yuji
419-57, Kaminakazato Isogo-ku
Yokohama(JP)
Inventor: Sato, Tatsuo c/o Patent & License
Department
NKK CORPORATION 1-2, 1-chome,
Marunouchi
Chiyoda-ku Tokyo(JP)
Inventor: Kawashima, Akihiro c/o Patent &
License Department
NKK CORPORATION 1-2, 1-chome,
Marunouchi
Chiyoda-ku Tokyo(JP)

(74) Representative: Füchsle, Klaus, Dipl.-Ing. et al
Hoffmann . Eitle & Partner Patentanwälte
Arabellastrasse 4
D-8000 München 81(DE)

(54) Partial vaporizer.

(57) A partial vaporizer comprises two vaporizing tanks (21),(22), into which a vaporizing section (12) is divided with a partition wall (26), original fluid flowing from an upper vaporizing tank (21) to a lower vaporizing tank (22), heating medium pipes (31), (32) for heating the original fluid which are arranged in each of the vaporizing tanks, a partition wall (46) dividing a vapor-phase portion of the vaporizing section, vapor produced out of each of the vaporizing tanks being not mixed with one another, tubes (41), (42) for taking produced vapor out of each of the vaporizing tanks and tube (8) for taking bottoms out of the lowest vaporizing tank.

FIG.3

## PARTIAL VAPORIZER

The present invention relates to a partial vaporizer for continuously carrying out a vaporizing operation.

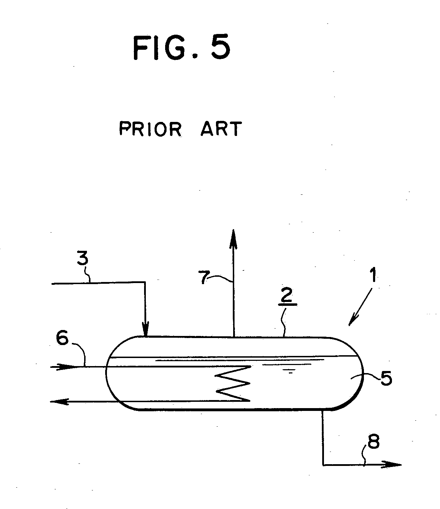

Partial vaporizer 1 as shown in Fig.5 has been hitherto pointed out as a partial vaporizer for continuously carrying out a vaporizing operation. In this partial vaporizer, original fluid is continuously fed from feed pipe 3 connected to an upper portion of vaporizing section 2 and steam is fed to heating medium pipe 6. Vapor produced from the original fluid is taken out through tube 7 on the upper side of the vaporizing section. Concentrated fluid, from which components of low boiling point have vaporized, is taken out through tube 8 at the bottom of the vaporizing section.

Since heat of vaporization is required to be constantly fed in said partial vaporizer, a great amount of heat is required. In consequence, a problem how to heat the original fluid efficiently and economically is posed as a great problem.

It is an object of the present invention to provide a partial vaporizer which can accomplish an object of energy saving by decreasing an amount of medium required for heating as a result of having increased an energy efficiency.

To accomplish the above-mentioned object, the present invention provides a partial vaporizer, wherein original fluid is continuously fed, fed original fluid is heated and components of low boiling point of the original fluid are vaporized, comprising:
at least two vaporising tanks, into which a vaporizing section is divided with a partition wall, original fluid flowing from an upper vaporizing tank to a lower vaporizing tank;
a heating medium pipe for heating the original fluid, which is arranged in each of the vaporizing tanks;
a tube for taking produced vapor out of each of the vaporizing tanks; and
a tube for taking bottoms out of the lowest vaporizing tank.

Further, the present invention, wherein original fluid is continuously fed, fed original fluid is heated and components of low boiling point of the original fluid is vaporized, comprising:
at least two vaporizing tanks, into which a vaporizing section is divided with a partition wall, the original fluid flowing from an upper vaporizing tank to a lower vaporizing tank;
a heating medium pipe for heating the original fluid which is arranged in each of the vaporizing tanks;
a partition wall which divides a vapor-phase portion of a vaporizing section, vapor produced out of each of the vaporizing tanks not mixing with one another thanks to the partition wall;

tubes for taking produced vapor out of each of the vaporizing tanks separately; and
a tube for taking bottoms out of the lowest vaporizing tank.

The above objects and other objects and advantages of the present invention will become apparent from the detailed description to follow, taken in connection with appended drawings.

Fig.1 is an explanatory view of a partial vaporizer of the present invention;

Fig.2 is an explanatory view of a further partial vaporizer of the present invention;

Fig.3 is an explanatory view of a still further partial vaporizer of the present invention;

Fig.4 is an explanatory view of another partial vaporizer of the present invention; and

Fig.5 is an explanatory view of the prior art partial vaporizer.

In a partial vaporizer of the present invention, the following measures are desired to be taken so as to obtain bottoms having the same components as those of bottoms obtained by the prior art vaporizer:

(a) Components of hold-up in the lowest vaporizing tank out of at least two vaporizing tanks are made to be equal to components of hold-up in the prior art vaporizing section.

(b) Hold-up in the lowest vaporizing tank is heated by the same amount of heating medium as that of heating medium in the prior art partial vaporizer.

On the other hand, hold-up in each of vaporizing tanks upper than the lowest vaporizing tank is at least richer in components of low boiling point than hold-up in the lowest vaporizing tank. Accordingly, the components of low boiling point can be vaporized by a smaller amount of heating medium in those vaporizing tanks than that in the lowest vaporizing tank. The total vaporizing tanks being taken into consideration, the total amount of heating medium can be decreased, whereby an object of energy saving can be accomplished. That is to say, entropy loss is produced by mixing fluids having different components, but separation capability of a separation system is increased by decreasing this entropy loss.

The amount of heating medium can be further decreased by dividing vapor-phase portion in accordance with each vaporizing tank and keeping vapor-liquid equilibrium state in each vaporizing tank.

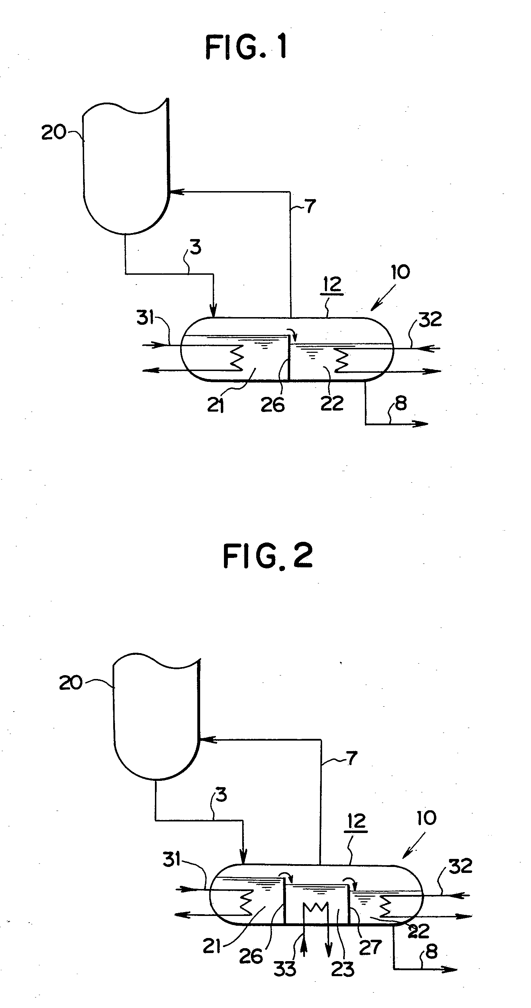

An example of the case where the partial vaporizer of the present invention is put into a rectification apparatus as a reboiler will be described with specific reference to Fig.1. Vaporizing section 12 of reboiler 10 is divided into two vaporizing tanks 21 and 22 by means of partition wall 26 dividing liquid-phase portion. Hold-up in rectification column 20 flows into vaporizing tank 21 on the left side of the vaporizing section through tube 3. Liquid having overflowed the vaporizing tank 21 flows into the vaporizing tank 22 on the right side of the vaporizing section. Steam tubes 31 and 32 for exchanging heat with the liquid through heating medium are connected to each of the vaporizing tanks 21 and 22. Vapor produced out of each of the vaporizing tanks is blown into a bottom portion of the rectification column through tube 7. Bottoms are taken out of the bottom of the vaporizing tank 22. When concentration of the bottoms is controlled to a predetermined value, a smaller amount of steam is used than that in the prior art vaporizer, whereby an energy saving can be accomplished.

Fig.2 is a schematic view illustrating an example of the case where liquid-phase portion of the vaporizing section 12 in the reboiler 10 is divided into three portions of the vaporizing tanks 21, 22 and 23 by means of partition walls 26 and 27. Steam tubes 31, 32 and 33 are connected to each of the vaporizing tanks 21, 22 and 23, respectively.

Subsequently, another example of the present invention will be described. In this example, partition wall 46 is arranged in vapor-phase portion of the vaporizing section 12 and vapor produced out of each of the vaporizing tanks is taken out through tubes 41 and 42 without mixing with one another. Since a vapor-liquid equilibrium state can be kept in each vaporizing tank, the amount of steam can be further decreased.

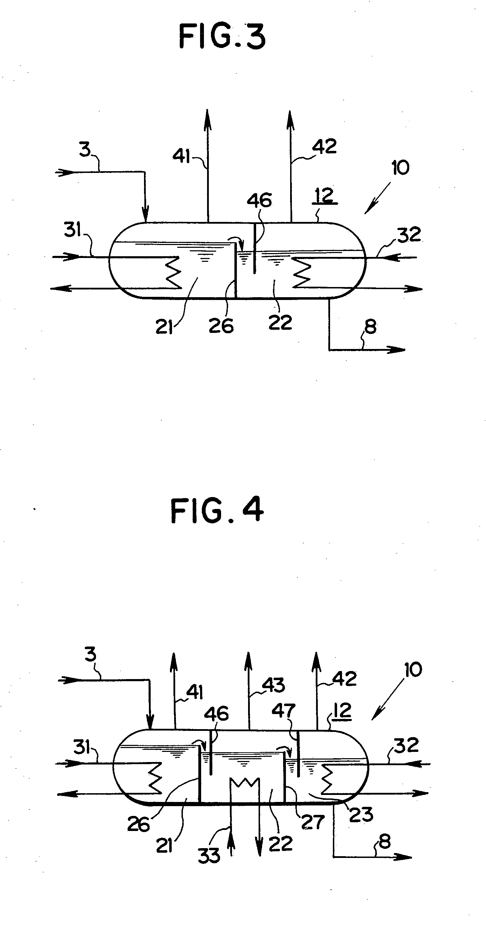

Fig.4 is a schematic view illustrating the case where liquid-phase portion of the vaporizing section is divided into three portions by partition walls 26 and 27 and a vapor-phase portion is divided into three portions by partition walls 46 and 47. Steam tubes 31, 32 and 33 are connected to each of the vaporizing tanks 31, 32 and 33, respectively. Vapor produced out of each of the vaporizing tanks 21, 22 and 23 is taken through tubes 41, 42 and 43.

Reference signs in the claims are intended for better understanding and shall not limit the scope.

## Claims

1. A partial vaporizer, wherein original fluid is continuously fed, fed original fluid is heated and components of low boiling point of the original fluid are vaporized, characterized by comprising:
at least two vaporizing tanks (21), (22), into which a vaporizing section (12) is divided with a partition wall (26), original fluid flowing from an upper vaporizing tank (21) to a lower vaporizing tank (22);
heating medium pipes (31),(32) for heating the original luid, which are arranged in each of the vaporizing tanks;
a tube (7) for taking produced vapor out of each of the vaporizing tanks; and
a tube (8) for taking bottoms out of the lowest vaporizing tank.

2. The vaporizer of claim 1, characterized in that said vaporizing tanks are three tanks (21), (22), (23), into which the vaporizing section is divided with the partition wall.

3. The vaporizer of claim 1, characterized in that said heating medium pipe is a steam tube.

4. A partial vaporizer, wherein original fluid is continuously fed, fed original fluid is heated and components of low boiling point of the original fluid is vaporized, characterized by comprising;
at least two vaporizing tanks (21), (22), into which a vaporizing section is divided with a partition wall (26), the original fluid flowing from an upper vaporizing tank (21) to a lower vaporizing tank (22);
heating medium pipes (31), (32) for heating the original fluid which are arranged in each of the vaporizing tanks;
a partition wall (46) which divides a vapor-phase portion of a vaporizing section, vapor produced out of each of the vaporizing tanks not mixing with one another thanks to the partition wall;
tubes (41), (42) for taking produced vapor out of each of the vaporizing tanks separately; and
a tube (8) for taking bottoms out of the lowest vaporizing tank.

5. The vaporizer of claim 4, characterized in that said vaporizing tanks are three tanks (21), (22), (23), into which the vaporizing section is divided with the partition wall.

6. The vaporizer of claim 4, characterized in that said heating medium pipe is a steam tube.

FIG. 1

FIG. 2

# FIG.3

# FIG.4

# FIG. 5

PRIOR ART

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 578 469 (A.W. GOLDSBARRY) * Column 3, lines 3-28; figure 1 * | 1-6 | B 01 D 3/14 |

|  |  |  | TECHNICAL FIELDS SEARCHED (Int. Cl.4) |
|---|---|---|---|
|  |  |  | B 01 D |

The present search report has been drawn up for all claims

| Place of search | Date of completion of the search | Examiner |
|---|---|---|
| THE HAGUE | 31-01-1990 | VAN BELLEGHEM W.R. |

EPO FORM 1503 03.82 (P0401)